# EUROPÄISCHE PATENTSCHRIFT

(11) **EP 1 005 912 B1**
(45) Veröffentlichungstag und Bekanntmachung des Hinweises auf die Patenterteilung: **04.09.2002**
(21) Anmeldenummer: 00103122.8
(22) Anmeldetag: 07.06.1996
(51) Int. Cl.: B03B 9/06, B09B 3/00

(54) **Verfahren zur Wiedergewinnung von Sekundärrohstoffen aus Restmüll und Reststoffen**
Method for recovering secondary materials from waste and residues
Procédé pour récupérer des matières secondaires à partir de déchets et de résidus

(30) Priorität: 09.06.1995 AT 31095 U
(43) Veröffentlichungstag der Anmeldung: 07.06.2000
(62) Teilanmeldung aus: 96915902.9
(73) Patentinhaber: Felber, Walter, 8010 Graz (AT)
(72) Erfinder: Felber, Walter, 8010 Graz (AT)
(74) Vertreter: Gibler, Ferdinand, Dipl.Ing. Dr. techn.

(56) Entgegenhaltungen:
- EP-A- 0 082 815
- EP-A- 0 628 526
- WO-A-94/24072
- DE-A- 2 939 743
- DE-A- 3 037 714
- US-A- 4 517 925

## Beschreibung

Die Erfindung betrifft ein mehrstufiges Verfahren zur Wiedergewinnung von Sekundärrohstoffen aus Restmüll und Reststoffen, wobei der Restmüll und die Reststoffe zerkleinert, nach Fraktionen und/oder Korngrößen klassiert und im Wechsel trocken- und naßbehandelt werden, woraufhin eine Verwertung von Werkstoffen und biologischen Stoffen durchgeführt wird.

In der DE 30 37 714 A1 ist eine Anlage zum Aufbereiten von Abfällen aus Haushaltungen und gewerblichen Abfällen mit hausmüllähnlicher Zusammensetzung zwecks Verwertung ihrer Bestandteile unter Anwendung mechanischer und nicht mechanischer Trennverfahren gezeigt. Es sind dabei getrennte Plätze für die Aufgabebunkerung, mechanische Auswahl-, Verteil- und Mischeinrichtungen und anschließende Aufschließungs-, Trenn- und Sortiereinrichtungen vorgesehen, wobei auf der Hausmüllseite vor der manuellen Auswahl- und Verteileinrichtung eine siebartige Vorrichtung zur Eingangstrennung und gleichzeitigen Öffnung von Behältnissen, z.B. Müllbeuteln, und nach der manuellen Auswahl- und Verteileinrichtung eine Kunststoffseparierung und eine anschließende Zerkleinerungsvorrichtung sowie eine Siebeinrichtung und ein Windsichter angeordnet sind. Der Leichtgutaustrag ist mit einer Auswahl- und Verteileinrichtung auf der Gewerbemüllseite verbunden. Auf der Hausmüllseite ist der Feinkornaustrag der siebartigen Vorrichtung zur Eingangstrennung unter Zwischenschaltung einer Zerkleinerungsvorrichtung als Befeuchtungsstation mit einer den Frischkompost selbsttätig austragenden Kompostierungseinrichtung verbunden, sodaß Sortierung und Kompostierung fortlaufend gleichzeitig geschehen.

Weiters ist in der EP 0 628 526 A1 ein Verfahren beschrieben, mit welchem Naßbehandlung in nennenswertem Umfang vorgenommen wird, während die trockene Behandlung praktisch keine Bedeutung hat. Auf trockenem Weg findet nur eine gröbliche Aufkonzentration des Gesamtmülls statt. Alle Müllreste werden bereits im ersten Schritt zerkleinert, um den Wasserzutritt zu allen stofflichen Bestandteilen zu ermöglichen. Dies hat eine Komponente mit Glasfeinstbruch zur Folge, die sich als störender Bestandteil im Kompost wiederfindet. Durch die Naßbehandung mit Wäschern, Pulpern, einer Flotationsanlage und einem Fermenter ergibt sich ein hoher apparativer Aufwand für die Bewältigung des Gesamtabfalls.

Aufgabe der Erfindung ist es, ein Verfahren gemäß Oberbegriff des Patentanspruches 1 anzugeben, durch welches es möglich wird, eine vollständige Reduktion von Reststoffen und Restmüll zu erreichen bzw. keine unverwertbaren Reste zu hinterlassen, wobei eine hohe Sortenreinheit der wiedergewonnenen, verwertbaren Stoffe erreicht werden soll.

Diese Aufgabe wird durch die im kennzeichnenden Teil des Patentanspruches 1 angegebenen Maßnahmen gelöst.

Weitere Ausführungsformen der Erfindung können durch die Maßnahmen der abhängigen Patentansprüche 2 bis 5 verwirklicht werden.

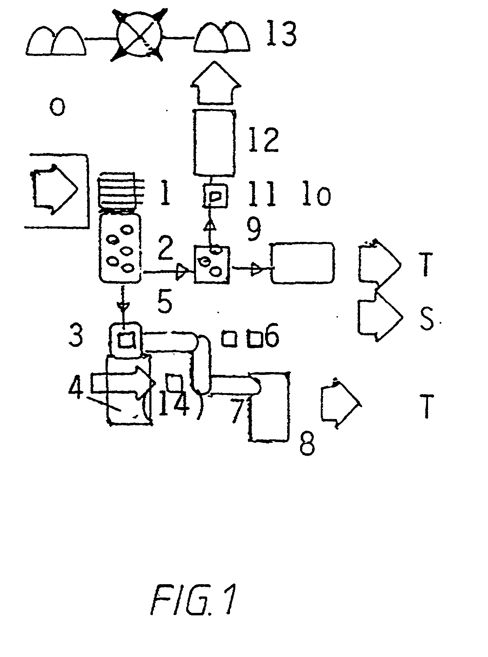

Nachfolgend wird die Erfindung anhand der in den beigeschlossenen Zeichnungen dargestellten Ausführungsformen für Anlagenteile zur Durchführung des erfindungsgemäßen Verfahrens eingehend erläutert. Es zeigt dabei
Fig.1 eine Ausführungsform eines Anlagenteils vor Ort für Restmüll o.ä.;

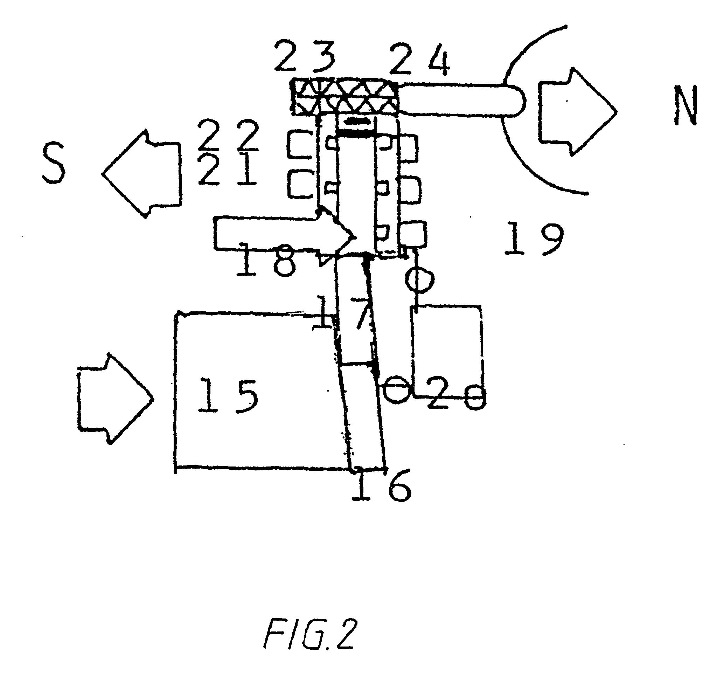

Fig.2 eine Ausführungsform eines Anlagenteils für die stationäre und trockene Behandlung und

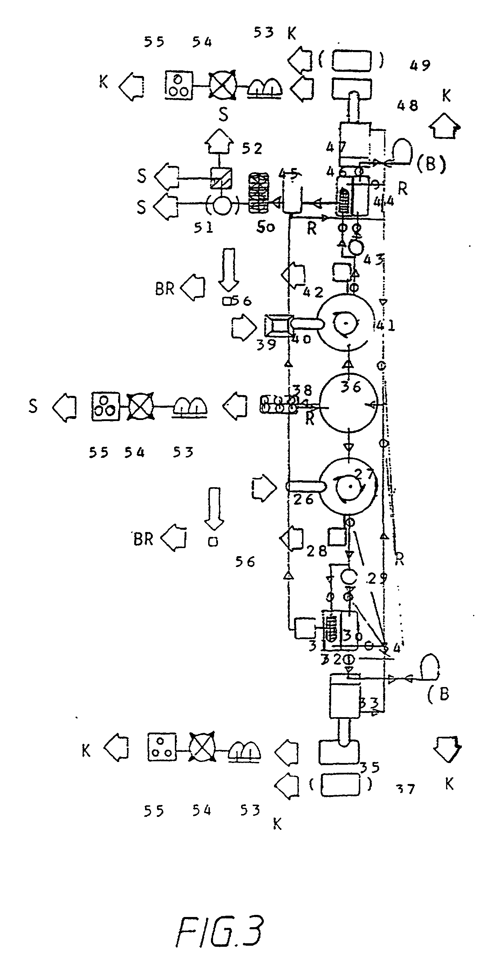

Fig.3 eine Ausführungsform eines Anlagenteils für die stationäre, nasse Behandlung sowie für die trocken-nasse Sekundärrohstoff-Konditionierung und Aufbereitung.

### Teil 1. Anlagenteil vor Ort für trockene Reste .

Bei einem Verfahren zur Reduzierung von bisher unverwertbaren, trockenen Rückständen aus Restmüll aus Haus-und hm-ähnlichem Gewerbemüll,die nach Trennung von Papier,Glas,Metall ,Kunststoffen ,Biomüll und nach Installierung der Clearance-Stufe "Recyclinghof" zur Entgiftung und Entfrachtung der Restmüllmenge noch verbleiben, wird im Gegensatz zu den bisherigen Verfahren und Anlagen getrachtet, Restfeinfraktion und mehrere verwertbare Fraktionen durch die Art des Erstanlagenaufbaus bereits vor Ort einen möglichst großen , hierorts ohne Schwierigkeiten verwertbaren Rest- und Störstoffanteil aus der total angelieferten Restmüllmenge abzutrennen . Dabei wird über eine Abladerampe(0) mit geeignetem Höhenunterschied in den Aufgabetrichter eines mobilen Trommelsiebs (2) mit Steingittervorsatz (1) von 150 mm Abstandsweite und Sieblochgröße von 25 - 40 mm der Restmüll abgekippt.
Während die Feinfraktion zur weiteren Aufbereitung zu Landschaftsbau-Müllkompost für den Einsatz als Deponieabdeckmaterial oder Landschaftsbaukompost je nach Qualität einer Aufbereitungsschiene (9-13)zugeführt wird ,wird der Grobfraktionsaustrag auf eine quer zum Austrag liegende Schrägförderbandlinie (5) abgeworfen ,vor der jedoch ein in Längsrichtung des Abwurfs aufgebauter Überbandmagnetabscheider(3) angebracht ist und Fe-Metalle (und mitgerissene Kunststoffolien) in einen Fe-Metallcontainer (4) -bei Bedarf um Windsichter (14) für die Kunststoff-Folienabscheidung ergänzt - abtrennt.
Am Ende des Schrägförderbandes (5)erfolgt an einem Sortiertisch (6) eine Störstoffkontrollsichtung ,ausgerichtet auf jene Materialien, die spätere Prozessabläufe entlasten ,anderseits um Stoffe,deren Schmutzanhaftungen keinen gravierenden Hindernisgrund für eine Verwertung vor Ort bedeuten (z.B.Radfelgen, Glasbruch ,Textilien).

Ein Schrägförderband 2 ( 7),auf das der Restmassenstrom geführt wird, führt in den Grobfraktionscontainer bei transportfähiger Verdichtung(8), die auf eine allfällige Bahnfracht (40 t pro Waggon = 13 t Maximum pro ACTS -kompatiblem Container) ausgerichtet sein soll.

Die Feinfraktion (9-13)wird durch ein kleines Trommelsieb (9) mit 10-15 mm Maschenweite geführt ,wodurch die gröbere Mittelfraktion abgetrennt und einem Mittelfraktionscontainer (10) zugeführt ,und der der feinfraktionsreststrom nochmals über einen Metall- oder Induktionsabscheider (11) geführt ,bevor er von einem LKW-compatiblen Container (12) zu einer moglichst nanen Intensivrottemiete(13),z.B. auf bestehenden oder ehemaligen Deponien oder einem vergleichbaren Umsetzplatz verbracht wird,um anschließend lokal als Abdeck- oder Landschaftsbaumaterial eingesetzt zu werden.Leicht-Kunststoffanteile werden mit Windsichter(14) von den Fe-Metallen abgetrennt.

Durch diese Kombination reduziert sich die Restmüllmenge um mehr als 40% des vormaligen Anlieferungsgewichts ,biogene Fraktion bleibt örtlich liegen,Sekundärrohstoffe mit örtlichen Verwertungsmöglichkeiten werden Rohstoffverwertern sofort zugeführt .Nur der Reststrom wird zu einer stationären Anlage - in faktisch beliebiger Entfernung - der Weiterbehandlung verbracht.

### Teil 2 . Anlagenteil stationär ,trockener Behandlungsteil.

Die Restmenge - als Siebüberlauf anzusehen - wird von Container auf die Abladefläche gekippt(15), nach kurzer Kontrollsichtung durch Sortierpersonal auf Problemstoffe,sperrige Störstoffe wie Teppichverbund ,... abgesucht und in den Flachbunker(16) abgeleert. Dieser ist mit einer Absaugeeinrichtung von Entlüftungsschächten, die zu einem Biofilter(20) führen,versehen .

Ein Schragförderband(17) führt aus dem Bunker auf die Anhöhe einer Sortierbühne(21) ,dabei fördert ein Windsichter(18) Leichtgut mit großer Oberfläche,hauptsächlich Kunststoff-Folien ,in einen Kunststoff-Folien-Container(19) ,oberlagig wird Gebläseluft in einen Biofilter (20) per Saugzug abgesaugt. Auf der Sortierbühne besteht durch Negativ-Sortierung einer Handverlesung oder maschinellen Sortierung die Möglichkeit ,zusätzlich zur Kunststoff- Folien-Windsichtung weitere 4 Störstoffe ,die der Nachbehandlung abträglich sind und anderseits die nachfolgende nasse Zerreiß- und Wäschestufe nicht dringlich erfordern ,durch Abwurfschächte mobilen Containern zuzuführen .

Der Reststrom wird noch auf der Sortierbühne höhendosiert und unter einen oberlagigen Plattermagnet(23) geführt,um vor allem Kleinmetalle und metallhaltige Problemstoffe,wie Batterien abzuziehen.

Nach diesem Entgiftungsschritt erst wird zerkleinert.Eine Schraubenmühle(24) soll Restproblemstoffe tunlichst nicht zerstören, jedoch gequetschte Stoffe für das Angreifen von Wasser in der nachfolgenden Wäsche- und Zerreißstufe zugänglich machen. Ein Schrägförderband 2 (25) führt den zerkleinerten Restmassenstrom zur Naßbehandlung (N).

Im Gegensatz zur bisherigen Praxis vergleichbarer Konditionierungsbestrebungen ist durch stärkere Betonung von Siebung,Sortierung und Sichtung sowie Abscheidung von Restmassenteilströmen das Verfahren mehr auf jeweils den nächstfolgenden Komponenten der Verfahrenskette als Konditionierungsschritt ausgelegt.
Die Analysen am Sortiertisch und der Reststromgewichte haben gezeigt, daß Störstoffe wie Wintersportschuhe aus GFK, Textilien,Duroplaste nmtl. und NFE-Metalle noch immer deutlich mehr als 20% des Restmassenstroms betragen,aber weder faserfähig im nassen Zerreißvorgang sind ,noch von Verwertungsbetrieben allzu hohe Anforderungen an den stofflich-sauberen Zustand gestellt werden,sondern daß vielmehr von den Verwertungsbetrieben selbst geshreddert und spezialkonditioniert wird.Auch eine Vor - behandlung -zu Granulat im Feinshredder (Teil 3/4, Anl.25 )-ist denkbar. bevor der derart konditionierte Sekundärrohstoff (S) zum Verwerter geliefert wird.

### Teil 3/4 Anlagenteil stationär, nasser Behandlungsteil plus weitere Konditionierung für die Verwertung.

Der vonoptischer Kontrolle (26) nacherfaßte Reststrom führt zu einem Stofflöser 1(27) ,der auf die Zerreißung von Faserverbund neben der Wäsche- und Ablösefunktion von anhaftendem Schmutz auf nichtfaserfähigen Stoffen (Kunststoffe,Metalle,...) ausgerichtet sein soll. Insofern ist ein Zerreißlaufrad für Faserverbund wichtiger Komponent, der aus einer Stofflöserbaureihe ausgewählt wird.Die Spezialwendel mit 3 mm - Faserlochboden-Lochung ist neben einem Leichtfraktionsaustragssystem (31,32) und einem Schwerteilaustrag 1(28) mit doppelter Schleuse wichtigster Elementteil der Stoffaufspaltung mit Wasser.

Die Schwerstoffschleuse setzt an der Trogbodenschräge mit einer Vertiefung an, in die beim Anrühren durch die Fliehkraft die Schwerteile Steine,Porzellan, Keramik,Kleinmetalle und Glas in der Hauptsache abgesetzt werden.Bei Schließung des oberen Schleusenschiebers und Öffnung des unteren wird die Schwerteilfraktion in einen mobilen Container abgeworfen und zur Entwässerung und Weiterbehandlung gebracht .

Die Schlammfraktion wird bei weiterer Zerreißung mit Hilfe eines effizienten Pumpenwerks über einen Hydrozyklon 1 (29) zum Faserschlamn container 1 in Tieflage (30) gepumpt und von hier zur Schlammbehandlungskompakteinheit 1(33) mit Flockung und Entwässerungsfunktion.Das Prozeßwasser wird mit geeigneten Pumpen zurückgepumpt (34),der Faserschlammkuchen mit rund 30% TS (Trockensubstanz) beim Austrag (35) wird der Kompostierung ( K ) mit Dämpfung zur Abtötung von Keimen,Pilzen ,Viren und Sporen ,Umsetzung und Restabsiebung bis zur Verkaufsfähigmachung (53,54,55) zugeführt,als Option (37) der Faserschlamm-Kuchenverwertung steht die Produktion von Substrat für die Pilzzucht offen. Dagegen wird das Rückstandsgranulat aus dem Hydrozyklon dem integrierten Bauschutt-Recycling-Prozeß zugeführt (BR).

Nur bei extrem guten Gärtest-Parametern würde die Biogasproduktion (B) als Option offengehalten ,an die Eindickung oder Ausbringung an den Austrag vergorenen Suspensionsfluidums anschließt,das Hauptbestandteil der Naßvergärungsverfahren ist.
Die Behandlung der Leichtfraktion geht derart vonstatten,daß der Leichtfraktionsaustrag entweder über Leichtfraktionsrechen oder über die offene Schwerteilschleuse nach einem Zweitspülvorgang mit 5000 Liter /4 % TS - der Erstzerreiß- und Austragsvorgang ist mit 10 000 Liter und etwa 5% TS vonstatten gegangen - direkt in den Leichtfraktionscontainer 1(32) in Tieflage erfolgt.Der Rechengutkorb (31)wird durch Heben , Ausschwenken und öffnen bei der Option Zweitspülvorgang vom Rechengut entsorgt,ein mobiler Container verbringt es zur Entwässerung (45) .Die Option oberlagigen Leichtfraktionsaustrags erfolgt mit dem Systemteil LOHSE - Abfall-Naßauflöser,D.Patent Nr. P 4235119 im Fischvorgang.

Ähnlich erfolgt der Stofflösevorgang mit dem Zielgut Feinrechengut aus Abwasserreinigungsanlagen wie Klärwerken.
Eine zuvor trockene Abziehung von Störstoffen o.ä.entfällt.
Das Feinrechengut ,hinsichtlich der Schwermetallbelastung ,wie vom Antragsteller in Auftrag gegebene Analyse gezeigt hat,um unter einer Zehnerpotenz geringer kontaminiert als der Klärschlamm derselben Kläranlage ,wird vom Feinrechengutaufgabesilo (39) auf das Schrägförderband 2(40) aufgegeben und in die zweite Stofflöserlinie neben dem trockenen behandelten Material (41) befördert.
Der Schwerteilaustrag 2(42),Hydrozyklon 2,43; Faserschlamm-Zwischenbehälter 2 (44 ),Rechengutkorb 2 (46) und die Schlammbehandlungs-Kompakteinheit 2 (47) sind ebenso wie der Schlammkuchenaustrag 2 (48) und die Schlammverwertungsoption Pilzzuchtsubstrat (49) spiegelbildlich wie beim trockenen Eintragsmaterial ausgebildet.Desgleichen ein Windsichter zur Abtrennung von Glas (56) bei Bauschuttzuweisung (BR), und die Option einer einfachen Biogasanlage (B),je nach Eintragsgut .
Beide Schienen benötigen als Nachbehandlungsschritte gemeinsam die Anl. Leichtfraktion-Feinshredder (50)nach Leichtfraktionsaustrag aus dem Container und Leichtfraktionsentwässerung (45) ,an die sich nach der Option eines (51) Kunststoff-Hydrozyklons bereits die Schritte des Anl.Teils Verwertung (Teil 4) als weiterführende Konditionierung anschließen.Darunter der NFE-Induktionsabscheider (52) und der Abtransport als konditionierter Sekundärrohstoff (S). Desgleichen der Dämpfvorgang (53) ,der Umsetzvorgang (54 )und Absiebvorgang (55) zur Herstellung fertiger Komposte (K).

Gemeinsam wird auch der Prozeßwasserrücklauf (R) einer Anl.Modul-Einheit des Teils 3/4 verwendet.Pumpen (34) führen Prozeßwasser aus der Schlammbehandlungs-Kompakt 1 und 2 in den Prozeßwassertank (36) zurück . Dieser ist mit einem Fassungsvermögen des gesamten im Kreislauf befindlichen Prozeßwassers für den Anstartfall des Arbeitsbeginns und einer Zuleitung von Frischwasser (F) ausgestattet und am unteren Ende kegelförmig konisch bis zur Doppelschleuse für den Sinkstoffaustrag ausgebildet.Nach Schließen der oberen Schleusensperre und Öffnung der unteren ergießt sich eine Sinkstoffmenge von 0,5 m³ aus der Doppelschleuse bei jedem Stofflösevorgang in den Zufluß zu einer Filtersack-Einheit (38) der Vorfiltrierung.

Gereinigtes Prozeßwasser wird in den Prozeßwassertank zurückgeleitet. Von hier werden 10 000 und anschließend 5 000 Liter Prozeßwasser und die Frischwasserzugabe von rund 1 500 Liter pro Stofflösevorgang entnommen. Der Prozeßwasserkreislauf kann sich bei Kompostlager mit Sickerwassertank im Anlagen - verbund mit Ausnahme der Verdunstungs- und Niederschlagswasserbilanz sogar voll kreislauf schließend aufbilanzieren,jegliches Prozeßwasser wird im Abwasserkreislauf geführt.Trotzdem soll ein Prozeßwasser-By Pass zur Schonung der Rücklaufund Pumpenführung gewährleistet sein,desgleichen Zwischentanks mit Dachwasserspeisung (ZW).

Für die übrigen trockenen Eintragsstoffe wie Siebreste,verschmutzte Kunststoffe und abgesiebten Altmüll gilt die Behandlung analog der trockenen Behandlungsschiene,für Naßabfälle analog zur nassen Behandlungsschiene.Gärtests attestieren den Einsatz der Zusatzoption Biogasanlage oder Faulturm einspeisung(B).

Die Verwertungslinie von Faserschlammkuchen-Kompost ist an die Versetzung mit geshredderter Rinde gekoppelt .Die Verwertungslinie der übrigen Sekundärrohstoffe (S) ist darauf ausgerichtet,daß diese in sauberem Zustand die Anlage verlassen und entweder unmittelbar oder nach kurzer Aufbereitung in den Verwertungsfabriken in den Stoffkreislauf zurückgeführt werden können.Mischkunststoffe, die nach Kunststoffhydrozyklon nicht weiter separiert werden können,werden der rohstofflichen Verwertung zugeführt.Problemstoffe werden dem befugten Entsorger übergeben.
- 0: Abladerampe/Umladestation
- 1: Steingitter
- 2: Großes Trommelsieb,mobil
- 3: Überbandmagnetabscheider
- 4: Fe-Metallcontainer
- 5: Schrägförderband 1
- 6: Störstoffkontrollsichtung 1
- 7: Schrägförderband 2
- 8: Grobfraktions-Container
- 9: Kleines Trommel sieb,mobil
- 10: Mittelfraktionscontainer
- 11: Metall-Induktionsabscheider
- 12: Feinfraktions-Container
- 13: Rottemieten
- 14: Windsichter
- T: Transport zum TEIL. 2
- S: Sekundärrohstoffverwertung

- 15: Abladefläche
- 16: Flachbunker
- 17: Schrägförderband 1
- 18: Windsichter
- 19: Kunststoff-Folien-Container
- 20: Biofilter mit Saugzügen
- 21: Sortierbühne mit 5 Störstoff-
- 22: Containern u.Abwurfschächten
- 23: Reststrom-Höhendosierung und
Fe-Kleinteile-Abscheidung
- 24: Schraubenmühle
- 25: Schrägförderband 2
Sekundärrohstoffe
Zum TEIL 3/Naßbehandlungsstufe
- 26: Aufgabe-Schrägförderband-Sicht-u.Sensorkontrolle
- 27: Stofflöser 1
- 28: Schwerteilaustrag 1 (Container)
- 29: Hydrozyklon 1
- 30: Faserschlamm-Zwischenbehälter 1
- 31: Rechengutkorb 1 und -austrag
- 32: Leichtfraktions-Zwischenbehälter 1
- 33: Schlammbehandlungs-Kompakteinheit 1
- 34: Prozeßwasser- und Dickstoffpumpen
- 35: Faserschlammkuchenaustrag 1(Container)
- 36: Prozeßwassertank
- 37: Schlammverwertungsoption Pilzzuchtsubstr.
- 38: Filtersack-Vorfiltriereinheit
- 39: Feinrechengutaufgabesilo
- 40: Schrägförderband 2
- 41: Stofflöser 2
- 42: Schwerteilaustrag 2(Container)
- 43: Hydrozyklon 2
- 44: Faserschlamm-Zwischenbehälter 2
- 45: Leichtfraktionsentwässerung nach-austrag
- 46: Rechengutkorb 2
- 47: Schlarmbehandlungs -Kompakteinheit 2
- 48: Faserschlammkuchenaustrag 2(Container)
- 49: Schlammverwertungsoption Pilzzuchtsubstrat
- 50: Leichtfraktion-Feinshredder
- 51: Verwertungsoption Kunststoff-Hydrozyklon
- 52: NFE-Induktionsabscheider
- 53: Rottemieten mit Keimtötung Dämpfung
- 54: Mietenumsetzgerät und Rindenmischer
- 55: Kompost-Absiebetrommel wie 9,TEIL 1
- 56: Windsichter
- K: Verkaufsfähige Komposte
- S: Sekundärrohstoffe
- B: Option Biogasanlage oder Faulbehälter
- BR: Bauschuttrecycling

## Patentansprüche

1. Mehrstufiges Verfahren zur Wiedergewinnung von Sekundärrohstoffen aus Restmüll und Reststoffen, wobei der Restmüll und die Reststoffe zerkleinert, nach Fraktionen und/oder Korngrößen klassiert und im Wechsel trocken- und naßbehandelt werden, woraufhin eine Verwertung von Werkstoffen und biologischen Stoffen durchgeführt wird, **dadurch gekennzeichnet, daß** vor dem Zerkleinern Feinfraktionen von der Gesamtfraktion abgetrennt und unter eine vorbestimmbare Kontamination entgiftet werden, daß der bei der Entgiftung abgetrennte, kontaminierte Teilmassenstrom in einem Naßbehandlungsschritt von anhaftenden Verschmutzungen gereinigt wird und über eine Schwerstoffseparierung sortenrein ausgeschieden wird, daß aus der anfallenden Grobfraktion die eisenhältigen Bestandteile und leichte Kunststoffe abgeschieden werden sowie der verbleibende Rest der Grobfraktion entfrachtet wird, daß der entfrachtete Restmassenstrom zerkleinert und/oder geöffnet, einer Naßbehandlung zugeführt und dort von Verschmutzungen gereinigt wird und aus diesem eine Schwerfraktion, eine Leichtfraktion und eine Faserschlammsubstrat-Fraktion aufgespaltet wird, und daß die resultierenden Teilmassenströme als Sekundärrohstoffe, Sekundärbrennstoffe und entgiftete Faserschlamm-Rohsubstrat-Fraktion zur Bodenverbesserung verwertet werden.

2. Verfahren nach Anspruch 1, **dadurch gekennzeichnet, daß** in einem ersten Anlagenteil für trockene Reste
a) schon am Ort der Anlieferung oder einer regionalen Umladestation in einer mobilen Sieb- und Abscheidekombination von trockenem, stofflichen Input, wie Restmüll, Siebresten od. dgl., aus Kompostanlagen, verschmutzten Kunststoffen und Altmüll zuerst sperriges Gut größer als 150 mm durch einen Steingittervorsatz (1) eines mobilen Trommelsiebes (2, 9) abgetrennt und einem schonenden Zerkleinerungsvorgang mit Sackaufreißer zugeführt oder ganze geschlossene Müllsäcke mit Restmüll an den Ablieferer zurückgestellt werden,
b) durch das mobile Trommelsieb (2, 9) der feinfraktionelle, überwiegend biogene Massenteil kleiner 40 mm/25 mm Stückgröße von der Grobfraktion abgesiebt wird,
c) die nach einer zweiten Feinabsiebung der Feinfraktion verbleibende Mittelfraktion 10/15 mm bis 25/40 mm für den Transport in geeignete, bahnkompatible Container abgefüllt wird,
d) das Feingut aus dem zweiten Feinabsiebungsvorgang einer Metall-Induktionsabscheidung (11) und anschließend einer Intensivrotte (13) zugeführt wird und je nach Qualität nach der Ausreifung im Landschaftsbau Verwendung findet,
e) die Grobfraktion nach dem Abwurfförderband (5) für die groben Reste durch einen mindestens 1m langen, in Längsrichtung des Abwurfförderbandes (5) stehenden Überbandmagnetabscheider (3) Eisenteile über die Breite eines quer dazu wegführenden Trogförderbandes abzieht und am Ende des Magnetlaufwerks die Eisenmetalle gemeinsam mit mitgerissenen Kunststoff-Folien in einen bereitgestellten Fe-Metalle-Container (4) abwirft und
f) beim zweiten Absiebevorgang oder unterstützt durch Windsichter (14) oder Seitgebläse die Kunststoff-Folien von den Fe-Metallen abgetrennt werden,
g) der Restmassenstrom der Grobfraktion nach Schritt e) vom Trogförderband auf einen mobilen Kontroll-Sortiertisch (6) abgeworfen wird und hier eine erste Sichtkontrolle auf in der Region verwertbare Störstoffe erfolgt, die gleichzeitig entweder Geruchsbildung am Transportweg verursachen oder spätere Stoffqualitäten beeinträchtigen können.

3. Verfahren nach Anspruch 2, **dadurch gekennzeichnet, daß** in einem zweiten Anlagenteil für trockene Reste
h) der aus dem ersten Anlagenteil kommende Restmassenstrom vor Ort in eine eingehauste, stationäre Anlage verbracht und auf einer großen Abladefläche abgeleert, auf sofort erkennbare große Störstoffe abgesucht und der getrennten Sammlung durch Wertstoff-Container zugewiesen werden, sowie davon nicht betroffene Reste in einen Flachbunker mit Absaugung und Abluftführung mit Biofilter abgekippt werden,
i) anschließend ein zweiteiliges Steigförderband mit verschiedenen, steuerbaren Geschwindigkeiten und durch Sortierpersonal zu bedienendem Handstoppzug den Restmassenstrom mengenmäßig vordosieren kann.
j) und anschließend auf die Höhe einer Sortierbühne (21) transportiert, die mit Seitgebläse/Windsichtung (18) zum Abwurf großflächiger Kunststoff-Folien in einen ersten Abwurfschacht (22) mit darunter bereitgestelltem, mobilem Container ausgestattet ist,
k) für weitere vier Störstoffe Abwurfschächte (22) und darunter bereitgestellte, mobile Container vorgesehen sind, um diese sofort einer Verwertung oder einer weiteren Konditionierungsstufe am Standort zuzuführen,
l) der nach dem Sortiergang nachgelagerte Restmassenstrom und die Mittelfraktion aus Schritt c) gemeinsam unter einen oberlagigen Fe-Plattenmagnet geführt werden und kleinstückige Resteisenmetalle und Restproblemstoffe vor der letztmaligen Zerkleinerung vor der Naßbehandlungsstufe abgezogen werden,
m) vom Restmassenstrom nach Schritt l) durch eine Schraubenmühle (24) die großen und gequetschten Stücke allseitig für die nachfolgende lösliche Kraft des Wassers geöffnet werden und generell größere Stücke auf Handtellergröße zerkleinert werden.

4. Verfahren nach Anspruch 3, **dadurch gekennzeichnet, daß** in einem dritten Anlagenteil für trockene Reste
n) der Restmassenstrom nach dem zweiten Anlagenteil der trockenen stationären Behandlung über ein Schrägförderband in einen mit Wasser bei entsprechendem Temperaturmilieu befüllten Stofflöser (27) der Bauart Hochzerreißtyp bei einem Verhältnis von 95 Teilen Wasser zu 5 Teilen Restmasse das zerkleinerte, noch leicht verschmutzte trockene Stoffgemisch aufgrund der Dichte der Partikel klassiert, faserfähige Stoffe durch den Rühr- und Zerreißvorgang auffasert und Schmutzpartikel ablöst,
o) der Trogboden -Trograndübergang in einem Winkel von 35 - 45% ausgebildet ist, um das durch die Fliehkraft zum Trogrand driftende Schwergut aus dem Aufgabematerial durch einen Einschnitt in diese Schrägfläche von mindestens 0,5m³ Schleusenvolumen an Raum zwischen oberem und unterem Schleusenschieber dieselbe Größe aufweist und mit Öffnungsund Schließmechanismus das Schwergut ausgetragen werden kann,
p) durch die 3mm-Lochung der Lochteller-Bodenplatte der durch die Pumpe abgezogene Faserschlamm über einen Hydrozyklon (43) und weiters in einen Faserschlammzwischenbehälter (44), von hier in eine Schlammbehandlungskompakteinheit abgezogen, zu ca. 30% Trockensubstanz abgepreßt und zu einer Faserschlammkuchenmiete gemeinsam mit dem abgepreßten Faserschlammkuchen aus demselben Naßverfahrensschritt für nasse Reste des Feinrechengutes aus Kläranlagen verbracht und weiter konditioniert wird,
q) die um die abgelösten Schmutzteile befreiten, nichtfaserfähigen Leichtstoffe in einem zweiten Nachspülvorgang mit vorgereinigtem Prozeßwasser bei einem Verhältnis von 95 Teilen Wasser zu 5 Teilen Leichtfraktion mit anhaftenden Fasern versetzt und durch eine Abzweigung der Schwergutschleuse in einen Leichtfraktionszwischenbehälter (44) mit Rechengutkorb (46) ausgetragen, entwässert und zur Weiterkonfektionierung verbracht werden,
r) die Zerstörung von Keimen, Viren, Pilzen, Sporen, od. dgl. im Faserschlammkuchen aus dem Vorgang nach Schritt p)und aus der laufenden Vorfiltrierung des Prozeßwassers aus dem Prozeßwassertank (36) mit nach unten konisch zulaufender, zylindrischer Ausbildung bis zu einer Schwebfracht-Doppelschleuse mit 0,5 m³ Volumen und Abzug dieses Schwebfracht-Schlamms durch ein Filtersacksystem nach gemeinsamer Faserschlammkuchenkompostierung durch Dämpfung der Miete daraus mittels mobilem Dämpfsystem erfolgt;
s) für trockene Rückstände aus Siebanlagen, aus Kompostanlagen und Altmüllaufbereitung in gleicher Weise wie für Restmüll bis zum Schritt r) erfolgt
t) die Behandlung verschmutzter Kunststoffe aus der Gelben Tonne bzw. dem Gelben Sack mit der Zerkleinerung durch die Schraubenmühle (24) gemäß Schritt m) beginnt, sofern nicht eine ähnliche Vorbehandlung beim Lieferanten bereits erfolgt;
u) die Behandlung von Feinrechengut und Sandfangrückständen aus Kläranlagen o.ä. mit direkter Aufgabe in den Stofflöser gemäß Schritt n) erfolgt.

5. Verfahren nach einem der vorhergehenden Ansprüche, **dadurch gekennzeichnet, daß** in einem vierten Anlagenteil
v) die Aufbereitung zu vermarktungsfähigen Sekundärrohstoffen in maximalem Ausmaß und die Bereithaltung und Zwischenlagerung von sauberen Restrückständen bis zur Abholung durch die Verwerter durchgeführt wird, wobei durch die zweistufige Naßaufbereitung der Leichtfraktion die Kunststoffe mit Dichte leichter als 1 bzw. schwerer als 1 abgetrennt und gleichzeitig deren Heizwert infolge Verschmutzungsreduktion auf bis 30 000 kJ/kg Hᵤ steigt,
w) Überkorn aus dem Hydrozyklon (43) einen Induktionsabscheider zur Abtrennung aller Metalle durchläuft und der nichtmetallische Überlauf dem Bauschuttrecycling zugewiesen und der metallische Überlauf dem Metallrecycling zugewiesen wird,
x) die gereinigte Schwerfraktion mittels Windsichtung Glasbruch von Steinkorn abtrennt und Nichteisenmetalle durch einen NFE-Abscheider (52) abgezogen werden
y) das reine Leichfraktionsgemisch mit Separator getrocknet, feingeshreddert und das Granulat auf leichte Kunststoffe für werkstoffliches Recycling und übrige Kunststoffe und Reststörstoffe für rohstoffliches Recycling separiert wird,
z) der abgepreßte Faserschlammkompost entweder zur Rottenmiete verbracht, gedämpft, umgesetzt und nach der Heißphase von Reststörstoffen feinabgesiebt und mit Rinde bis zur Ausreifungszeit versetzt wird oder
aa) auf ein geeignetes K-N-P-Verhältnis bei einem Trockensubstanzgehalt von 32% - 38% Pilzzuchtsubstrat konditioniert wird,
bb) nur die Mischung zwischen Faserschlammkuchen aus Feinrechengut und Faserschlammkuchen aus Feinfraktion trockener Reststoffe mindestens im Verhältnis 1:1 gewählt wird, um vorbestimmbare Grenzwerte von Gartenkompost zu unterschreiten.

## Claims

1. A multi-stage method for recovering secondary raw materials from waste and residues, with the waste and the residues being comminuted, classified according to fractions and/or grain sizes and being alternately treated dry and wet, whereupon a utilization of raw materials and biological materials is performed, **characterized in that** prior to the comminution fine fractions are separated from the entire fraction and are detoxified under a predetermined contamination, that the contaminated partial mass flow separated during the detoxification is cleaned in a wet treatment step from adhering impurities and is separated in a sorted way by way of high-gravity solids separation, that the iron-containing components and light plastic materials are separated from the occurring coarse fraction and the remaining residue of the coarse fraction is removed, the removed residual mass flow is comminuted and/or opened, is supplied to a wet treatment and is cleaned from impurities and that from the same a heavy fraction, a light fraction and a fiber sludge substrate fraction is split up, and that the resulting partial mass flows are utilized as secondary raw materials, secondary fuels and a detoxified fiber sludge raw substrate fraction for the improvement of the soil.

2. A method as claimed in claim 1, **characterized in that** in a first plant section for dry residue
a) at first bulky material larger than 150 mm is separated by a stone grate attachment (1) of a mobile drum screen (2, 9) already at the place of delivery or regional reloading station in a screening and separating combination of dry material input such as residual waste, screen residue or the like from composting installations, soiled plastic materials and is supplied to a careful comminution process with bag openers or entire closed waste bags with residual waste being returned to the supplier;
b) the fine-fraction, predominantly biogenous mass share which is smaller than 40 mm/25 mm piece size is screened off from the coarse fraction by the mobile drum screen (2, 9);
c) the medium fraction 10/15 mm and 25/40 mm which remains after a second fine screening of the fine fraction is filled into suitable railway-compatible containers for transportation;
d) the fine material from the second fine screening process is supplied to a metal induction separation (11) and thereafter to an intensive rotting (13) and is used in landscaping depending on the quality of the ripening;
e) the coarse fraction after the throw-off conveyor belt (5) for the coarse residue iron parts is withdrawn by an overhead magnetic separator (3) over the width of a transversally disposed trough conveyor leading away therefrom, which separator is at least one 1 m long and is disposed in the longitudinal direction of the throw-off conveyor belt, and ejects at the end of the magnetic running gear the iron metals jointly with entrained plastic film in a provided Fe-metal container (4), and
f) the plastic film is separated from the Fe metals during the second screening process or supported by an air separator (14) or lateral blower;
g) the residual mass flow of the coarse fraction is ejected after step e) from the trough conveyor onto a mobile inspection sorting table (6) and here a first visual check of interferents which can be utilized in the region is performed which either simultaneously cause the formation of smells during transportation or could impair later material qualities.

3. A method as claimed in claim 2, **characterized in that** in a second plant section for dry residue
h) the residual mass flow coming from the first plant section is moved on site to an enclosed stationary unit and is emptied onto a large unloading surface area, is checked for immediately recognizable large interferents and the separated collection is assigned to valuable material containers and residue not affected thereby is tipped into a flat bunker with a suction means and an air evacuation means with biofilter;
i) thereafter a two-part ascending conveyor with different controllable speeds and manual stop cord to be operated by the sorting staff can predose the quantity of the residual mass flow;
j) and is conveyed thereafter to the level of a sorting platform (21) which is equipped with a lateral blower/air separation (18) for ejecting large-area plastic film into a first throw-off chute (22) with mobile containers provided underneath the same;
k) throw-off chutes (22) for further four interferents and mobile containers disposed beneath the same are provided in order to supply the same to a utilization or a further conditioning stage on site;
l) the residual mass flow remaining after the sorting run and the medium fraction from the step c) are supplied jointly under an upwardly disposed Fe plate magnet and small-size residual iron metals and residual problem waste are withdrawn prior to the final comminution before the wet treatment stage;
m) from the residual mass flow after stage l) the large and squashed pieces are opened on all sides for the subsequent dissolving force of the water by a screw-type grinder (24) and generally large pieces are comminuted to the size of a palm.

4. A method as claimed in claim 3, **characterized in that** in a third plant section for dry residue
n) the residual mass flow after the second plant section of the dry stationary treatment via an inclined conveyor belt to a material dissolver (27) of the high-tearing type which is filled with water with a respective temperature environment at a ratio of 95 parts of water and 5 parts of residual mass and which classifies the comminuted, still slightly soiled dry material mixture on the basis of the density of the particles, unravels fibrous materials by the stirring and tearing process and detaches dirt particles;
o) the transition between trough floor and trough edge is formed at an angle of 35 to 45% in order to remove from the batch material the heavy material floating to the trough edge by centrifugal force by an indentation in said inclined surface of not less than 0.5 m³ sluice volume of space between upper and lower sluice slider having the same size and provided with opening and closing mechanism;
p) through the 3 mm perforation of the perforated floor plate, the fiber sludge which is drawn off by the pump is drawn off via a hydrocyclone (43) and further to an intermediate vessel (44) for the fiber sludge and from there to a compact sludge treatment unit, pressed into approx. 30% dry substance and moved to a fiber sludge cake pit jointly with the pressed fiber sludge cake from the same wet method step for wet residue of the fine rakings from the sewage treatment plants and is further conditioned;
q) the non-fibrous light materials as are relieved of the detached dirt particles are laced with adhering fibers in a second after-rinsing process with precleaned process water at a ratio of 95 parts of water and 5 parts of light fraction and discharged through a branch-off of the heavy material sluice to a light-fraction intermediate vessel (44) with a rakings basket (46), are dewatered and moved for further processing;
r) the destruction of germs, viruses, fungi, spores or the like in the fiber sludge cake from the process according to step p) and from the ongoing preliminary filtering of the process water from the process water tank (36) with a cylindrical arrangement which tapers downwardly in a conical manner up to a floating-load double sluice with 0.5 m³ volume and withdrawal of said floating load sludge through a filter bag system occurs after a common filter sludge cake composting by vaporizing the pit by means of a mobile vaporization system;
s) for dry residues from screening plants, from composting plants and old waste treatment occurs in the same manner as for residues up to step r);
t) the treatment of soiled plastic material from the "yellow barrel" or the "yellow bag" begins with the comminution by the screw-type grinder (24) according to step m) unless there has already been a similar pre-treatment by the supplier;
u) the treatment of fine rakings and sand catcher residues from sewage treatment plants and the like occurs with direct supply to the material dissolver according to step n).

5. A method as claimed in one of the preceding claims, **characterized in that** in a fourth plant section
v) the conditioning into marketable secondary raw materials is performed to the maximum extent and the provision and intermediate storage of clean residues is carried out until the collection by the utilizer, with the plastic materials with a density of lighter than 1 or heavier than 1 being separated by a two-stage wet treatment of the light fraction and at the same time their thermal value increases due to reduction in impurification up to 30,000 kJ/kg Hᵤ;
w) overflow from the hydrocyclone (43) passes through an induction separator for separating all metals, and the non-metallic overflow is assigned to building rumble recycling and the metallic overflow is assigned to metal recycling;
x) the cleaned heavy fraction separates broken glass from rock grain by means of air separation and non-ferric metals are drawn off by an NFE separator (52);
y) the pure light fraction mixture is dried with separator, finely shredded and the granulate is separated for material recycling with light plastic material and residual interferents are separated for raw material recycling;
z) the pressed fiber sludge compost is either brought to the rotting pit, vaporized, shifted and finely screened after the hot phase from residual interferents and is laced with bark until the maturing time, or
aa) is conditioned to a suitable K-N-P ratio at a dry substance content of 32% to 38% of mushroom cultivation substrate;
bb) only the mixture between fiber sludge cake from fine rakings and fiber sludge cake of the fine fraction of dry residues is chosen at least at a ratio of 1:1 in order to fall below predeterminable limit values of garden compost.

## Revendications

1. Procédé en plusieurs et étapes pour la récupération de matériaux à partir de déchets et de résidus, dans lequel les déchets les résidus sont broyés, triés par fractions et/ou grosseurs de grain et traités alternativement à sec et par voie humide, après quoi les matériaux et matières biologiques sont valorisés, **caractérisé en ce qu'**avant le broyage, les fines sont séparées de la masse et décontaminées en fonction d'une contamination pouvant être déterminée à l'avance, **en ce que** le flux partiel de matière contaminé séparé lors de la décontamination est nettoyé des impuretés qui y adhèrent lors d'une étape de traitement par voie humide et séparé par catégories au moyen d'une séparation des matières lourdes, **en ce que** les composants contenant du fer et les plastiques légers sont séparés de la fraction grosse et le reste de la fraction grosse est déchargé, **en ce que** le flux résiduel de matière déchargé est broyé et/ou ouvert, traité par voie humide et nettoyé des impuretés, et séparé en une fraction lourde, une fraction légère, et une fraction de substrat composé de fibres et de boue, et **en ce que** les flux de matière séparés en résultant sont valorisés sous forme de matériaux récupérés, de combustibles récupérés et de substrat de fibres et de boues employé pour l'amendement des sols.

2. Procédé selon la revendication 1, **caractérisé en ce que** dans la première partie de l'installation, destinée aux résidus secs,
a) dès le point de dépôt ou la station régionale de transbordement, dans un système mobile combinant criblage et séparation, les grosses pièces de plus de 150 mm sont séparées des matières sèches d'entrée telles que les déchets, résidus de criblage ou similaires provenant d'installations de compostage, les plastiques souillés et les déchets anciens par une grille à pierres (1) d'un tambour cribleur mobile (2, 9) et concassé sans violence avec ouverture des sacs, ou bien les sacs de déchets fermés contenant les déchets sont retournés à l'envoyeur,
b) la fraction fine et principalement d'origine biologique inférieure à 40 mm/25 mm est séparée de la fraction grosse par le tambour cribleur mobile (2, 9),
c) le fraction moyenne de 10/15 mm à 25/40 mm restant après un deuxième criblage fin de la fraction fine est déposée en vue du transport dans des bennes adéquates pouvant être transportées par rail,
d) les fines résultant du deuxième criblage fin sont amenées à un séparateur de métaux par induction (11) puis soumises à un pourrissage intensif (13) et utilisées après maturation, selon leur qualité, dans l'agriculture,
e) la fraction grosse en aval du convoyeur à courroie (5) d'éjection pour les gros résidus par un portique de séparation magnétique (3) large d'au moins 1 mètre et disposé dans le sens longitudinal du convoyeur à courroie d'éjection (5) retire les particules métalliques sur la largeur d'un convoyeur à plateaux et les métaux ferreux sont éjectés dans une benne à métaux ferreux (4) au bout du système magnétique en même temps que les feuilles de plastique entraînées,
f) les feuilles de plastique sont séparées des métaux ferreux lors de la deuxième opération de criblage ou avec l'aide de séparateurs pneumatiques (14) ou de souffleries latérales,
g) le flux de matière résiduel de la fraction grosse est éjecté après l'étape e) du convoyeur à plateaux vers une table mobile de tri et de contrôle (6) et soumis à une recherche visuelle des matières recyclables dans la région qui sont indésirables en cela qu'elles pourraient soit donner naissance à des odeurs pendant le transport, soit altérer la qualité des produits obtenus ultérieurement.

3. Procédé selon la revendication 2, **caractérisé en ce que** dans une deuxième partie d'installation destinée aux résidus secs,
h) le flux de matière résiduel provenant de la première partie de l'installation est introduit sur place dans une installation stationnaire intégrée et vidé sur une grande surface de déchargement, examiné pour repérer les matières indésirables de grande dimensions visibles et trié pour une collecte sélective dans des bennes à matériaux recyclables, et les résidus non concernés par ce tri sont déversés dans un caisson plat avec aspiration et extraction de l'air par des biofiltres,
i) un convoyeur à courroie ascendant en deux parties à plusieurs vitesses contrôlables et traction à arrêt manuel commandé par un opérateur de tri permettent ensuite de doser la quantité du flux de matières résiduelles,
j) et transporté ensuite à la hauteur d'une estrade de tri (21) équipée d'une soufflerie latérale ou d'un séparateur pneumatique (18) pour l'éjection des grandes feuilles de plastique dans une première gaine d'éjection (22) en-dessous de laquelle est disposée une benne mobile,
k) des gaines d'éjection (22) sont prévues pour quatre autres matières indésirables, avec des bennes mobiles disposées en-dessous, afin d'acheminer directement ces matières vers leur valorisation ou vers une autre étape de conditionnement sur le site,
l) le flux de matière résiduel entreposé après le tri et la fraction moyenne de l'étape c) sont acheminés ensemble sous un aimant à plaques de fer et les petits morceaux de métaux ferreux résiduels et le matières indésirables résiduelles sont retirés avant le dernier broyage précédant le traitement par voie humide,
m) les grandes pièces et les pièces écrasées du flux de matière résiduel sortant de l'étape l) sont ouvertes de toutes parts par un moulin à vis (24) pour permettre l'action de dissolution de l'eau par la suite et les grosses pièces sont hachées aux dimensions d'une soucoupe.

4. Procédé selon la revendication 3, **caractérisé en ce que** dans une troisième partie d'installation destinée aux résidus secs,
n) le flux de matière résiduel provenant de la deuxième partie de l'installation de traitement à sec stationnaire sur un convoyeur à bande oblique dans un pulpeur (27) du type déchiqueteuse verticale rempli d'eau à une température adéquate, à une proportion de 95 parties d'eau et 5 parties de masse de résidus, le mélange de matière sec broyé et encore légèrement contaminé est classé selon la densité des particules, les matières fibreuses sont dispersées par l'opération d'agitation et de déchiquetage et les particules de saleté sont dissoutes,
o) la transition entre le fond et le bord de l'auge est inclinée selon un angle de 35 à 45 %, afin que les matières lourdes provenant du matériau introduit flottant vers le bord de l'auge sous l'action de la force centrifuge puissent être évacuées par une ouverture dans cette surface oblique d'un volume de sas de 0,5 m³ au moins présente la même taille entre une vanne supérieure et une vanne inférieure de sas et avec un mécanisme d'ouverture et de fermeture,
p) la boue fibreuse prélevée par la pompe est aspirée à travers les perforations de 3 mm de la plaque de fond perforée en passant par un hydrocyclone (43) puis un bassin intermédiaire à boue fibreuse (44) et aspirée à partir de celui-ci dans une unité compacte de traitement des boues, pressée jusqu'à un taux de matière sèche de 30 % environ et acheminée vers un silo à paquets de boue fibreuse avec le paquet de boue fibreuse pressé provenant de la même étape de traitement par voie humide pour les résidus humides des fines de filtrage des installations d'épuration pour la suite du conditionnement,
q) les matières légères non fibreuses débarrassées des particules de saleté dissoutes sont additionnées dans une deuxième opération de rinçage d'eau de process purifiée à une proportion de 95 parties d'eau et 5 parties de fraction légère contenant des fibres adhérentes et évacuées par une bifurcation du sas à matières lourdes dans un bassin d'entreposage de la fraction légère (44) avec un panier à matières filtrées sur grille, déshydratées et acheminées vers le conditionnement,
r) la destruction des germes, virus, moisissures, spores et similaires dans le paquet de boue fibreuse provenant de l'étape p) et du préfiltrage continu de l'eau de process sortant du réservoir d'eau de process (36) de forme cylindrique et conique vers le bas jusqu'à un double sas à matières en suspension d'un volume de 0,5 m³ avec extraction de cette boue en suspension par un système de poches de filtrage est réalisée après compostage commun des paquets de boue fibreuse par projection de vapeur dans le silo au moyen d'un système à vapeur mobile,
s) le traitement des résidus secs des installations de criblage, de compostage et de traitement des déchets anciens se fait de la même manière que pour les déchets résiduels jusqu'à l'étape r),
t) le traitement des plastiques salis issus du tri sélectif commence par le broyage dans le moulin à vis (24) selon l'étape m) s'ils n'ont pas déjà subi un traitement préalable analogue chez le fournisseur,
u) les fines de filtrage et les résidus des filtres à sable des installations d'épuration ou similaires sont traités par dépôt direct dans le pulpeur de l'étape n).

5. Procédé selon l'une quelconque des revendications précédentes, **caractérisé en ce que** dans une quatrième partie d'installation,
v) les matériaux récupérés commercialisables sont traités au maximum et les résidus propres sont préparés et entreposés jusqu'à leur emportement par l'entreprise de valorisation, le traitement par voie humide en deux étapes de la fraction légère permettant de séparer les plastiques d'une densité inférieure à 1 et supérieure à 1 et d'augmenter le pouvoir calorifique jusqu'à 30 000 kJ/kg Hᵤ en réduisant l'encrassement,
w) les grosses particules de l'hydrocyclone (43) sont acheminées vers un séparateur à induction pour séparation de tous les métaux et les résidus non métalliques sont acheminés vers le recyclage des gravats et les résidus métalliques vers le recyclage des métaux,
x) la fraction lourde nettoyée est séparée par séparation pneumatique des débris de verre, des gravillons et des métaux non ferreux par un séparateur (52),
y) le mélange de fraction légère nettoyé est séché par un séparateur, déchiqueté en fines particules et séparée en granulés de plastiques légers pour le recyclage des matériaux et autres plastiques et matières résiduelles indésirables pour le recyclage des matières brutes,
z) le compost de boue fibreuse pressé est soit introduit dans un silo de pourrissage, traité à la vapeur et criblé après la phase à chaud pour séparer les matières indésirables résiduelles et additionné d'écorce jusqu'à maturité, soit
aa) conditionné pour obtenir un rapport K-N-P adéquat et un taux de matière sèche de 32 à 38 % pour obtenir un substrat pour culture de champignons,
bb) seul le mélange entre les paquets de boue séchés provenant des fines de filtrage et les paquets de boue séchées provenant des fines de résidus secs est sélectionné dans un mélange de 1:1 au moins pour ne pas dépasser des taux limites prédéterminés pour le compost de jardinage.
